# EUROPEAN PATENT APPLICATION

(11) **EP 1 622 214 A1**
(43) Date of publication of application: **01.02.2006**
(21) Application number: 04726770.3
(22) Date of filing: 09.04.2004
(51) Int. Cl.: H01M 2/10, H02J 7/00, H04M 1/02, H02J 9/00

(54) **AUXILIARY POWER SUPPLY**

(30) Priority: 10.04.2003 JP 2003106110
(71) Applicant: Tokai Corporation, Tokyo 151-0073 (JP)
(72) Inventor: KASHOJI, Y., Main Factory, Tokai Corporation, Sunto-gun, Shizuoka 410-1431 (JP); SAWAGUCHI, Jiro, Main Factory, Tokai Corporation, Sunto-gun, Shizuoka 410-1431 (JP); SERIZAWA, N., Main Factory, Tokai Corporation, Sunto-gun, Shizuoka 410-1431 (JP)
(74) Representative: Klunker . Schmitt-Nilson . Hirsch
(86) International application number: PCT/JP2004/005126
(87) International publication number: WO 2004/091012

(57) **Abstract**

An inexpensive auxiliary power supply for a cell phone is provided, which is capable of effectively utilizing a sheet battery included in a film battery pack for instant camera. The auxiliary power supply for a cell phone is constituted by a sheet battery (10) included in a film battery pack for instant camera; connecting chips (21A, 21B), each configured to be electrically connected to each of the electrodes (11A, 11B) of the sheet battery (10); wires (23A, 23B), each with one end connected to each of the connecting chips (21A, 21B) ; and a connector (22) connected to the other end of each of the wires (23A, 23B) , and is configured to be connected to a cell phone that receives power from the sheet battery (10).

## Description

### Technical Field

The present invention relates to an auxiliary power supply for use with a cell phone and the like through interconnection.

### Background Art

For portable devices that use a rechargeable battery as the power source, including cell phones, flashlights, radios, portable stereos and the like, the battery is recharged through a dedicated charger of the device when the battery is running out. If recharging of the battery has happened to be neglected before going out, however, the portable device may be unavailable to the user when the user wishes to use it because of power shortage of the battery.

To cope with such a situation, an auxiliary power supply for use, for example, with a cell phone is proposed, in which the auxiliary power supply is connected to the cell phone to supply power. Such auxiliary power supplies are available from convenience stores and the like. Thus, even if the battery of a cell phone has drained, telephone conversations and electronic mails may be exchanged by purchasing such an auxiliary battery having a connector that conforms to the model of the cell phone as an emergency step.

As one of such auxiliary power supplies for a cell phone, an auxiliary power supply which is based on a commercially available dry cell, and includes a connector that conforms to that of the cell phone and connecting terminals for connecting the terminals of the dry cell is proposed as described, for example, in Japanese Unexamined Paten Publication No. 2000-13483.

In recent years, as the widespread use of cell phones, the demand for such auxiliary power supplly is expanding.

In the mean time, a sheet battery is used as the battery for strobe light of an instant camera or the like. In recent years, as the demand for instant camera is decreasing, the demand for the sheet battery is also dwindling. Consequently, the stock of the sheet batteries has increased to such an extent that a certain amount of stocks need to be discarded, and the efficient use of the existing stocks has been sought by trial and error.

Thus, it is very convenient if a small, planar, and portable sheet battery is available for use with the power supply of a cell phone.

The conventional sheet battery used for an instant camera, however, produces a large current in a short time, which may amount to instantaneously around 20A, to generate strobe light. Therefore, it may not be used for recharging the battery of a cell phone which has a preset limit on recharging current in order to protect the internal circuitry and security reasons. Recently, more and more cell phones are provided with the preset limit on recharging current. In addition, it has been a trend that the recharging current is more tightly monitored than before by increasing the number of monitoring through a monitoring circuit and the like. Accordingly, the application of the sheet battery of instant camera to the power source of the auxiliary power supply for a cell phone has been out of consideration.

Therefore, it is an object of the present invention to provide an inexpensive auxiliary power supply capable of effectively utilizing a sheet battery which is decreasing in demand as the power source of a cell phone which is increasing in demand.

### Disclosure of Invention

The first auxiliary power supply of the present invention is an auxiliary power supply, comprising:
a sheet battery included in a film battery pack for instant camera, which is a rectangular sheet type battery having a pair of positive and negative electrodes;
connecting chips, each configured to be electrically connected to each of the electrodes of the sheet battery;
wires, each with one end connected to each of the connecting chips; and
a connector connected to the other end of each of the wires, and is configured to be connected to a cell phone that receives power from the sheet battery.

In the first auxiliary power supply described above, the each of the connecting chips may be a conductive tape with a conductive adhesive applied on the surface which is to be connected to each of the electrodes.

Further, the connecting chips may be clamping holders, each configured to be electrically connected to each of the electrodes of the sheet battery while clamping the sheet battery; and a conductive tape with a conductive adhesive applied on both sides may be applied between each of the clamp holders and each of the electrodes.

Still further, each of the connecting chips may be configured to be electrically connected to each of the electrodes of the sheet battery while detachably holding the sheet battery.

Further, a current limiting means for limiting the current that flows from the sheet battery to the cell phone may be provided between one of the connecting chips and one end of the wire corresponding to the connecting chip, or between the other end of the wire and the connector.

Still further, the current limiting means may be a resistive element and/or a diode.

Further, the current limiting means may be a resistive element having a resistance value in the range from 1Ω to 10Ω.

The second auxiliary power supply of the present invention is an auxiliary power supply, comprising:
a connector section configured to conform to the connector of a device to be connected thereto; and
a battery holding section electrically connected to the connector section, and is configured to be electrically connected to the electrodes of a sheet battery while detachably holding the sheet battery.

In the second auxiliary power supply described above, the battery holding section may comprise claming holders, each configured to be electrically connected to each of the electrodes of the sheet battery while clamping the sheet battery.

Further, the battery holding section may further comprise a case for accommodating the sheet battery, which includes terminals therein, each configured to be electrically connected to each of the electrodes of the sheet battery.

Still further, the case may comprise a case body having an opening for mounting the sheet battery therein, and is formed to accommodate the sheet battery mounted therein from the opening, and a lid for opening/closing the opening.

According to the first auxiliary power supply of the present invention, the power supply comprises: a sheet battery included in a film battery pack for instant camera, which is a rectangular sheet type battery having a pair of positive and negative electrodes; connecting chips, each configured to be electrically connected to each of the electrodes, wires, each with one end connected to each of the connecting chips; and a connector connected to the other end of each of the wires, and is configured to be connected to a cell phone that receives power from the sheet battery. Thus, the power supply may use the aforementioned sheet battery effectively as the power source of a cell phone. In addition, the power supply may be manufactured at low cost.

Further, in the first auxiliary power supply, when each of the connecting chips comprises a conductive tape with a conductive adhesive applied on the surface which is to be connected to each of the electrodes, or when each of the connecting chips comprises a clamping holder configured to be electrically connected to each of the electrodes of the sheet battery while claming the sheet battery, and a conductive tape with a conductive adhesive applied on both sides is applied between each of the clamp holders and each of the electrodes, more stable electrical connection between each of the electrodes of the sheet battery and each of the wires may be maintained. In the case where each of the electrodes of the sheet battery is made of an unsolderable material, the wire may be soldered to the conductive tape, and the conductive tape may be applied to the electrode. In this way, the electrical connection between each of the wires and each of the electrodes may be readily provided. Even in the case where the electrodes of the sheet battery are solderable, the use of the aforementioned method may prevent a significant reduction in operating life of the sheet battery due to the sheet battery being exposed to a high temperature of the soldering.

Still further, in the case where the connecting chips comprise clamping holders, each configured to be electrically connected to each of the electrodes of the sheet battery while clamping the sheet battery, the auxiliary power supply may be reused when the sheet battery has drained by simply replacing it with a new one. That is, the components comprising the auxiliary power source other than the sheet battery may be used repeatedly. This makes the auxiliary power supply superior in ecological viewpoint, since all that is discarded is the drained sheet battery. Further, the user of the auxiliary power supply needs to purchase only the sheet battery, which is economical for the user.

Further, in the case where a current limiting means for limiting the current that flows from the sheet battery to the cell phone is provided between one of the connecting chips and one end of the wire corresponding to the connecting chip, or between the other end of the wire and the connector, the auxiliary power supply may implement the recharging even when it is connected, for example, to a cell phone having a preset limit on recharging current.

Still further, in the case where the current limiting means comprises a resistive element and/or a diode, the current limitation may be implemented through a configuration which may be realized at low cost.

Further, in the case where the current limiting means comprises a resistive element having a resistance value in the range from 1Ω to 10Ω, the auxiliary power supply may implement recharging even for a cell phone having a preset limit on recharging current, and ensure sufficiently fast recharging speed and a sufficient amount of charges.

According to the second auxiliary power supply, the power supply comprises: a connector section configured to conform to the connector of a device to be connected thereto; and a battery holding section electrically connected to the connector section, and is configured to be electrically connected to the electrodes of a sheet battery while detachably holding the sheet battery. This allows the auxiliary power supply to be reused when the sheet battery has drained by replacing the sheet battery with a new one. That is, the connector section and battery holding section comprising the auxiliary power source other than the sheet battery may be repeatedly used. This makes the auxiliary power supply superior in ecological viewpoint since all that is discarded is the drained sheet battery. Further, the user of the auxiliary power supply needs to purchase only the sheet battery, which is economical for the user.

Further, in the case where the battery holding section comprises claming holders, each configured to be electrically connected to each of the electrodes of the sheet battery while clamping the sheet battery, the sheet battery is urged to the battery holding section and electrically connected thereto. Accordingly, the electrical connection between the sheet battery and battery holding section may be maintained favorably even after insertion and removal of the sheet battery from the battery holding section have been repeated a number of times.

Still further, in the case where the battery holding section further comprises a case for accommodating the sheet battery having terminals therein, each configured to be electrically connected to each of the electrodes of the sheet battery, the appearance of the auxiliary battery of the present invention becomes favorable, since the sheet battery is accommodated in the case rather than being exposed.

In this case, if the case comprises a case body having an opening for mounting the sheet battery therein, and is formed to accommodate the sheet battery mounted therein from the opening, and a lid for opening/closing the opening, the sheet battery may be readily replaced by opening/closing the opening.

### Brief Description of Drawings

Figure 1A is an external perspective view of an auxiliary power supply according to an embodiment of the present invention, illustrating the structure and part of the manufacturing process thereof.
Figure 1B is an external perspective view of an auxiliary power supply according to an embodiment of the present invention, illustrating the structure and part of the manufacturing process thereof.
Figure 2 is a drawing illustrating the arrangement of the electrical wires 23A, 23B of the auxiliary power supply shown in Figures 1A, 1B.
Figure 3A is a drawing illustrating the method for applying fixing tapes to the auxiliary power supply shown in Figures 1A, 1B.
Figure 3B is a drawing illustrating the method for applying fixing tapes to the auxiliary power supply shown in Figures 1A, 1B.
Figure 4 is a drawing illustrating a protection case for the auxiliary power supply shown in Figures 1A, 1B.
Figure 5 is a perspective view of the auxiliary power supply accommodated in the protection case shown in Figure 4.
Figure 6A is an external perspective view of an auxiliary power supply according to another embodiment of the present invention, illustrating the structure and part of the manufacturing process thereof.
Figure 6B is an external perspective view of an auxiliary power supply according to another embodiment of the present invention, illustrating the structure and part of the manufacturing process thereof.
Figure 7A is a drawing illustrating an adapter to be connected to the auxiliary power supply of the present invention.
Figure 7B is a drawing illustrating an adapter to be connected to the auxiliary power supply of the present invention.
Figure 7C is a drawing illustrating an adapter to be connected to the auxiliary power supply of the present invention.
Figure 8 is a drawing illustrating the auxiliary power supply of the present invention with an adapter being connected thereto.
Figure 9 is a drawing illustrating the auxiliary power supply of the present invention with an adapter and a cell phone being connected thereto.
Figure 10A is a drawing illustrating a part of the manufacturing process of the auxiliary power supply of the present invention.
Figure 10B is a drawing illustrating a part of the manufacturing process of the auxiliary power supply of the present invention.
Figure 11 is a drawing illustrating the measuring result of recharging currents of the auxiliary power supply shown in Figures 1A, 1B by altering the resistance of the resistive element thereof.
Figure 12 is an external perspective view of an auxiliary power supply according to another embodiment of the present invention, illustrating the structure thereof.
Figure 13 is a drawing of the auxiliary power supply shown in Figure 12 when viewed from the arrow A in Figure 12, illustrating the operational state thereof.
Figure 14 is an external perspective view of an auxiliary power supply according to still another embodiment of the present invention, illustrating the configuration thereof (first view).
Figure 15 is an external perspective view of an auxiliary power supply according to still another embodiment of the present invention, illustrating the configuration thereof (second view).
Figure 16 is an external perspective view of an auxiliary power supply according to still another embodiment of the present invention, illustrating the configuration thereof (third view).

### Best Mode for Carrying Out the Invention

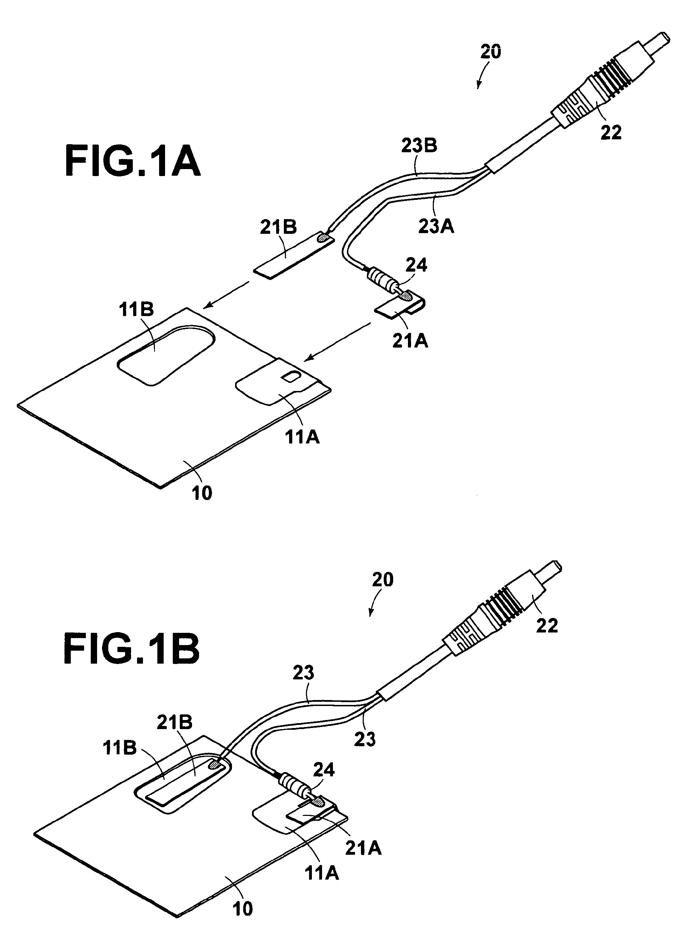

Hereinafter a first embodiment of the auxiliary power supply of the present invention will be described. As shown in Figure 1A, the auxiliary power supply according to the first embodiment includes a sheet battery 10 and coupler 20 for coupling the sheet battery 10 to a cell phone.

As shown in Figure 1A, the sheet battery 10 is a sheet battery included in a film battery pack for instant camera, which is a rectangular sheet type battery with a pair of positive and negative electrodes 11A, 11B formed on one side thereof. The sheet battery 10 used in the auxiliary power supply of the present embodiment is available from Polaroid Corporation, which may include, for example, the Polaroid BatteryP80® , Polaroid BatteryP100® , or the like. The dimensions of the Polaroid BatteryP80® and Polaroid BatteryP100® are 8.2cm by 6.93 cm with 0.47cm thickness, and 9.47 by 7 .72cm with 0. 47cm thickness respectively. The output voltage is approximately 6V, which may cause a current of 23A to flow through a load of 0.001Ω instantaneously. The positive electrode 11A is made of CPVC (carbon-loaded polyvinyl chloride) coated with zinc powder. The negative electrode 11B is made of synthetic manganese dioxide. Each of the electrodes 11A, 11B is covered with an aluminum plate. The sheet battery 10 utilizes the so-called Leclanche cell.

The coupler 20 includes: connecting chips 21A, 21B, each configured to be connected to each of the electrodes 11A, 11B of the sheet battery 10; a connector 22 configured to be connected to a cell phone; wires 23A, 23B, each for connecting the connector 22 to each of the connecting chips 21A, 21B; and a resistive element 24 provided between the connecting chip 21A and wire 23A. In the coupler 20 of the present embodiment, the resistive element 24 is provided between the connecting chip 21A and wire 23A. Alternatively, the resistive element 24 may be provided between the wire 23A and connector 22.

Each of the connecting chips 21A, 21B is a conductive tape made of copper with a conductive adhesive applied on one of the surfaces. The connecting chip 21A is soldered to one end of the resistive element 24, and one end of the wire 23A is soldered to the other end of the resistive element 24. The connecting chip 21B is soldered to one end of the wire 23B. The other end of each of the wires 23A, 23B is connected to the connector 22. In the present embodiment, a copper tape is used as the conductive tape. Alternatively, any material may be used for the conductive tape as long as it has conductivity, such as nickel or the like. Further, the structure of each of the connecting chips 21A, 21B is not limited to that of tape type, and a thin plate, such as a steel plate, may be used.

As shown in Figure 1B, the surface of the connecting chip 21A with a conductive adhesive thereon is applied to the electrode 11A of the sheet battery 10, and the surface of the connecting chip 21B with a conductive adhesive thereon is applied to the electrode 11B of the sheet battery 10. In addition, the connecting chip 21A is applied to the electrode 11A with one end thereof being folded to the rear surface of the sheet battery 10 as shown in Figure 1B.

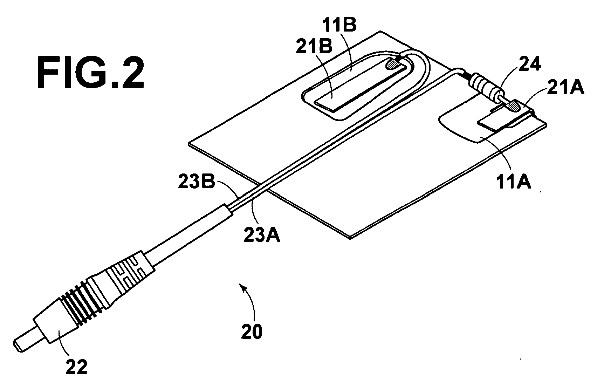

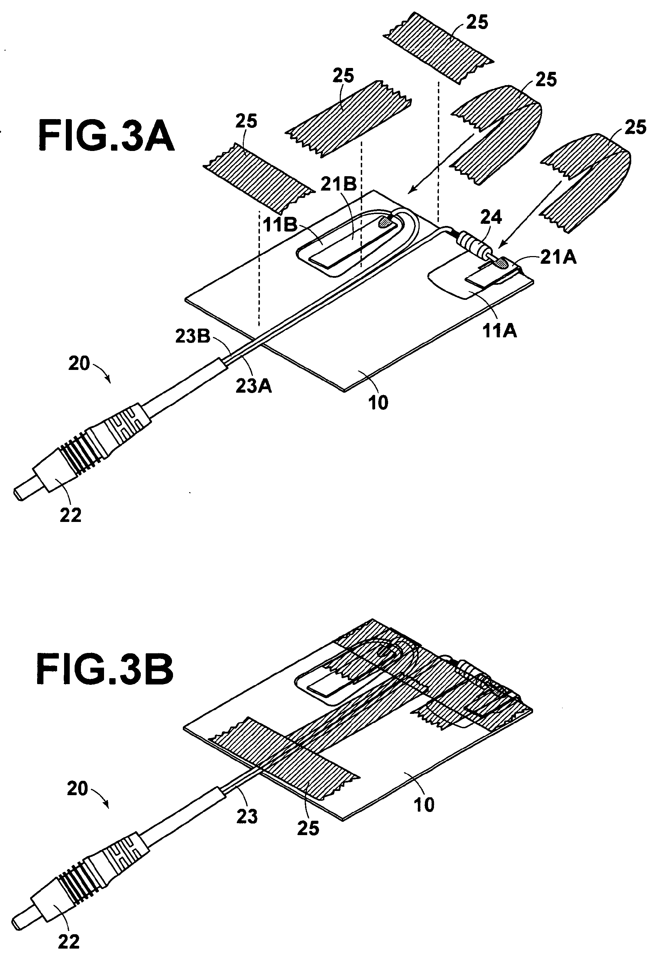

Preferably, the connector 22 is placed on the side of the connecting chips 21A, 21B which is opposite to the soldered side thereof as shown in Figure 2, and the wires 23A, 23B are placed between the electrodes 11A, 11B. Preferably, a fixing tape 25 is applied to wires 23A, 23B and connecting chips 21A, 21B to fix them on the sheet battery 10 as shown in Figures 3A and 3B. Preferably, the fixing tape 25 for fixing each of the wires 23A, 23B is applied along the lengthwise direction and along the direction which is orthogonal to the lengthwise direction. Preferably, the fixing tape 25 for fixing each of the connecting chips 21A, 21B is applied such that the soldered section is covered by the tape and a second fixing tape 25 is further applied over the first fixing tape 25.

By fixing the coupler 20 on the sheet battery 10 in the manner as described above, the coupler 20 may be prevented from being torn off the sheet battery 10 even if the coupler 20 is pulled in the direction toward the cell phone connected thereto.

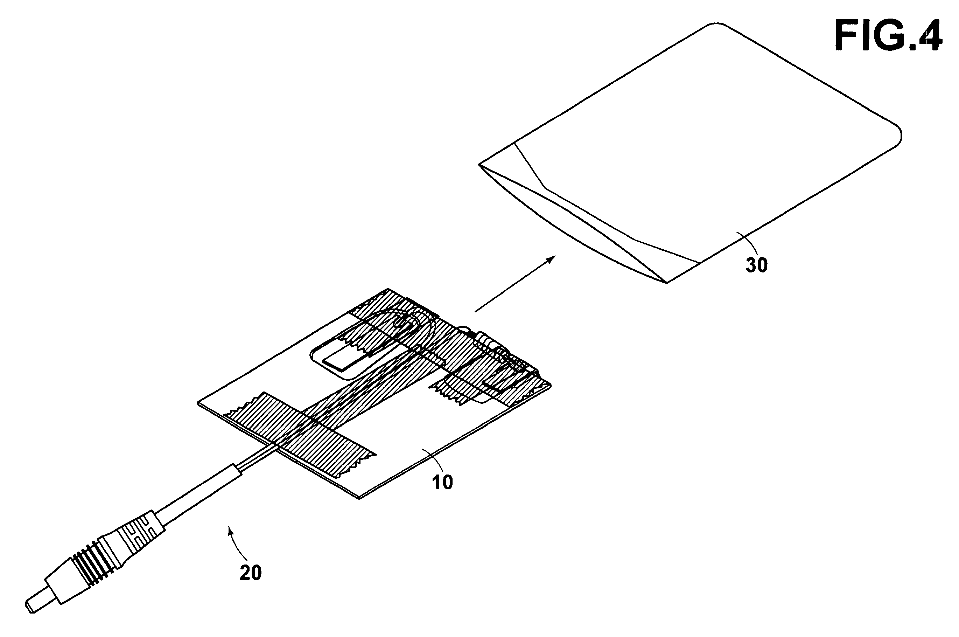

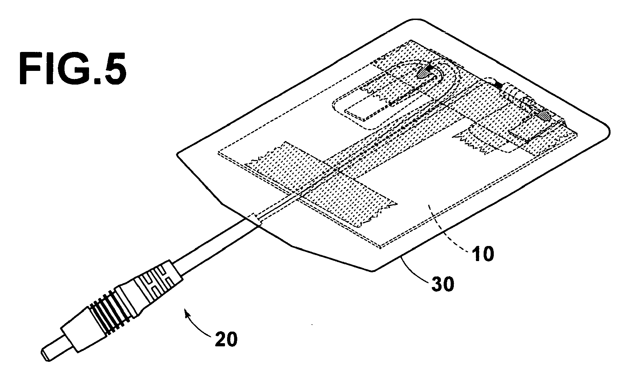

Preferably, the sheet battery 10 with the coupler 20 fixed thereon is encased in a protection case 30 as shown in Figure 4, and the opening of the case 30 is closed by heat treatment as shown in Figure 5.

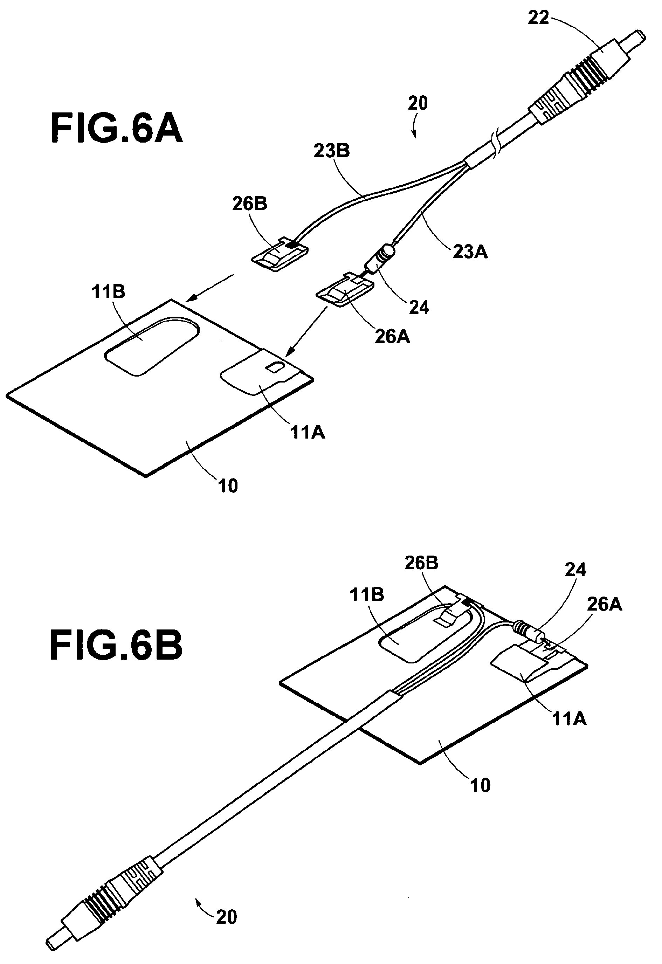

In the auxiliary power supply of the present embodiment, each of the connecting chips 21A, 21B comprises a conductive tape, which is applied to each of the electrodes 11A, 11B of the sheet battery 10. But the method for connecting the sheet battery 10 is not limited to this. For example, a metal clip shown in Figure 6A may be used as each of the connecting chips 26A, 26B, and the coupler 20 may be detachably attached to the sheet battery 10 by clamping the electrodes 11A, 11B of the sheet battery 10 with these clips as shown in Figure 6B. Alternatively, each of the connecting chips 26A, 26B maybe fixedly attached to each of the electrodes 11A, 11B by providing a conductive tape, which has a conductive adhesive applied on both sides thereof, between each of the connecting chips 26A, 26B and each of the electrodes 11A, 11B.

Further, a part of the electrode 11A may be peeled off the body of the sheet battery, and folded back to bring it into contact with the surface of the connecting chip 26A which is opposite to the surface that faces to the surface of the sheet battery 10 as shown in Figure 6B.

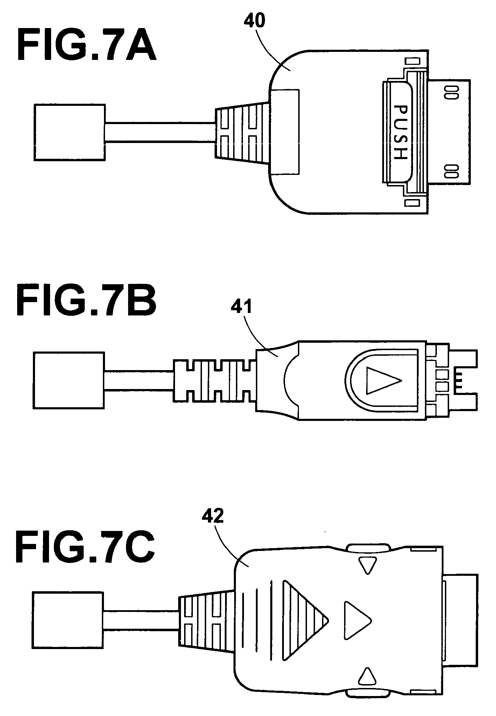

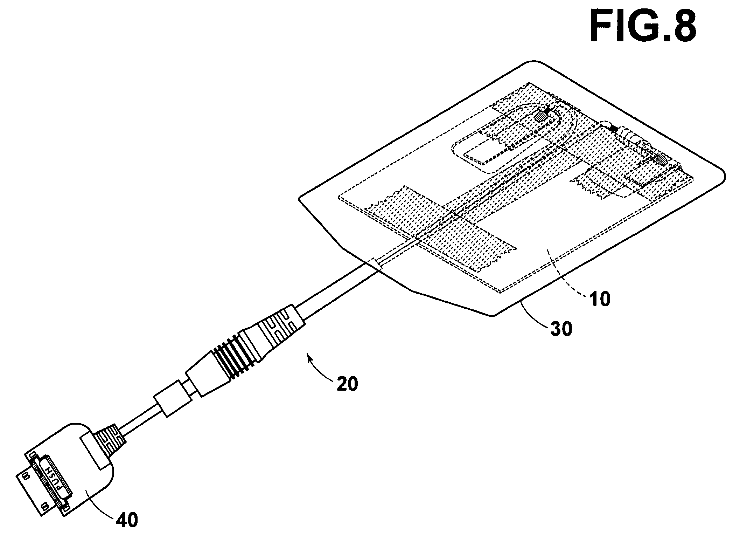

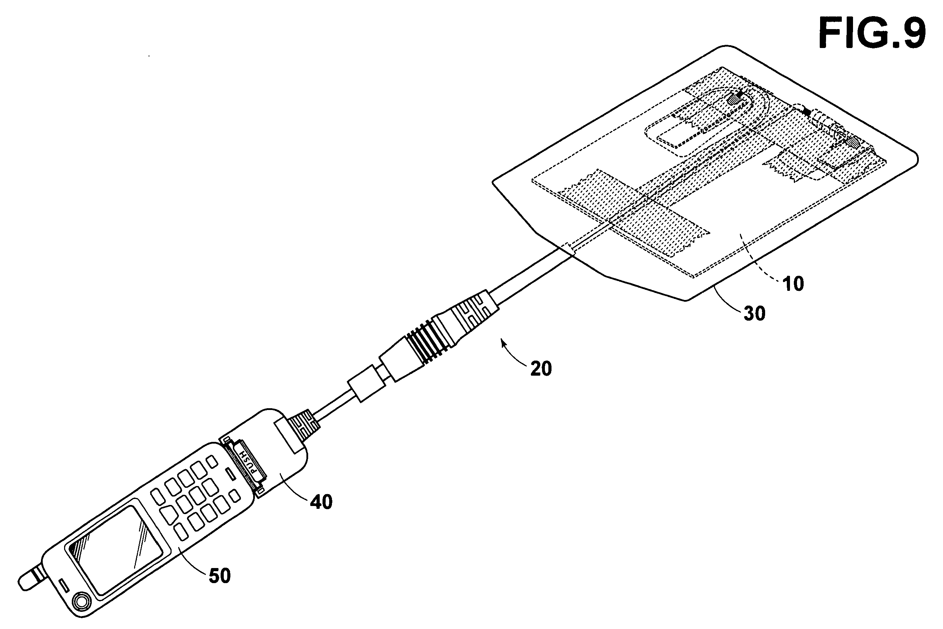

When the connecter 22 of the coupler 20 conforms to the configuration of the connector of a cell phone to be connected, it may be connected thereto directly. If the configuration of the connector 22 does not conform to that of the connector of the cell phone, an adapter 40, 41 or 42 shown in Figure 7A, 7B or 7C may be connected to the connector 22, and the coupler 20 may be connected to the cell phone through the adapter 40, 41 or 42. Figure 8 shows the connector 22 with the adapter 40 being connected thereto. Figure 9 shows the coupler 20 with a cell phone 50 being connected thereto through the adapter 40.

The use of the adapter 40, 41, or 42 in connecting the coupler 20 to the cell phone 50 allows the auxiliary power supply of the present embodiment to be connected to various cell phones having different types of connectors.

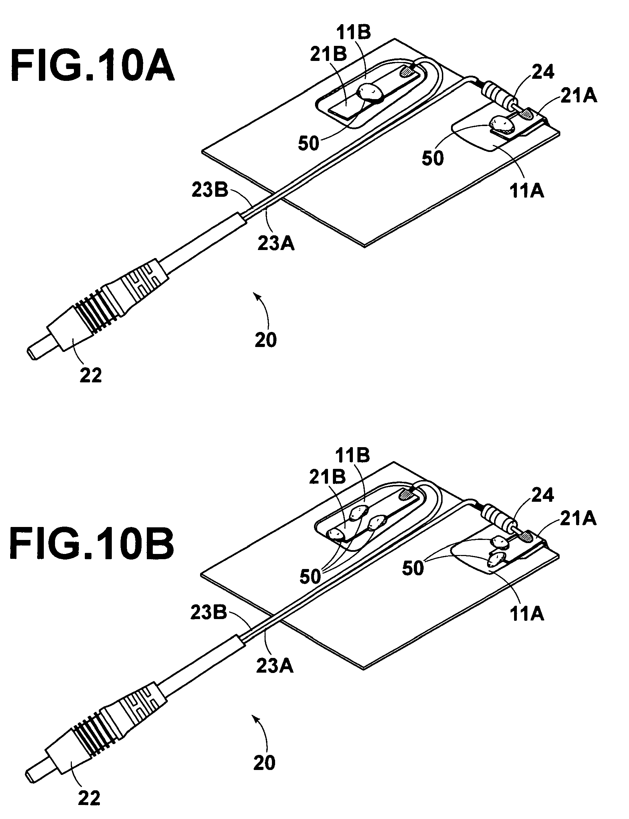

Further, as shown in Figures 10A and 10B, after each of the connecting chips 21A, 21B constituted by a conductive tape is applied to each of the electrodes 11A, 11B of the sheet battery 10, an adhesive that includes a conductive material, such as silver powders, copper powders, or nickel powders, may be applied on the edges of the connecting chips 21A, 21B to further enhance the fixing strength between each of the connecting chips 21A, 21B and each of the electrodes 11A, 11B.

Preferably, the resistance of the resistive element 24 is in the range from 1Ω to 10Ω, more preferably in the range from 3.3Ω to 6.8Ω. These values have been selected based on the measurements to be described herein below.

Generally, recharging current and voltage limits are provided for cell phones to protect the internal circuitry and safety reasons. For example, experimental results have revealed that Nokia Type 6610 and Nokia Type 8310 cell phones available from Nokia Corporation are provided with the following rechargeable voltage and current ranges.

| Model Name | Rechargeable Voltage Range | Rechargeable Current Range |
|---|---|---|
| Nokia type 6610 | From 5.27 to 9.55 (V) | From 170 to 907 (mA) |
| Nokia type 8310 | From 5.26 to 9.58 (V) | From 169 to 924 (mA) |

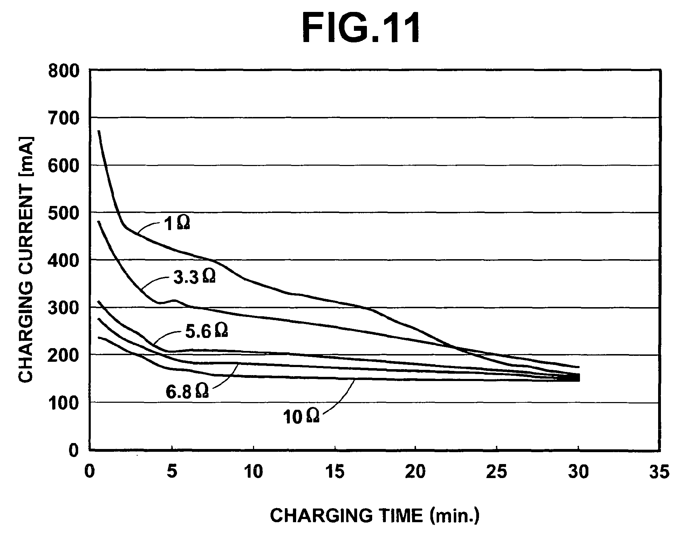

Accordingly, resistive elements having resistance of 1Ω, 3.3Ω, 5. 6Ω, 6.Ω, and 10Ω respectively were selected by taking into account the aforementioned rechargeable voltage and current ranges, and output voltages and currents of sheet batteries. Then, an auxiliary power supply with each of the resistive elements connected in turn thereto was connected to the cell phone 50, and recharging current flowing from the sheet battery 10 to the cell phone 50 was measured in each case. The results are shown in Figure 11.

As shown in Figure 11, the cell phone is rechargeable by the auxiliary power supply with any of the five different resistive elements, and more current flows, that is, more amounts of charges may be obtained with smaller resistance. In the mean time, when the resistance was less than 1Ω, the recharging current was too great and the recharging was not initiated.

When a same amount of recharging current is flowed, it is necessary to use a resistive element having greater rated wattage (heat capacity) in order to reduce the amount of heat generated by the resistive element. But the resistive element with a greater rated wattage has a greater size. In view of this and measurement results shown in Figure 11, a resistive element with resistance value of 3. 3Ω and rated wattage of 1W is best suited for use with the auxiliary power supply.

Further, a diode may be used instead of the resistive element if it is capable of turning the voltage and current of the sheet battery into values which are in the rechargeable voltage and current ranges. Alternatively, a serially connected diode and resistive element may be used. The use of a diode in the manner as described above may further ensure the safety, since it breaks like a fuse when an overcurrent occurs. Further, a reverse current may also be prevented.

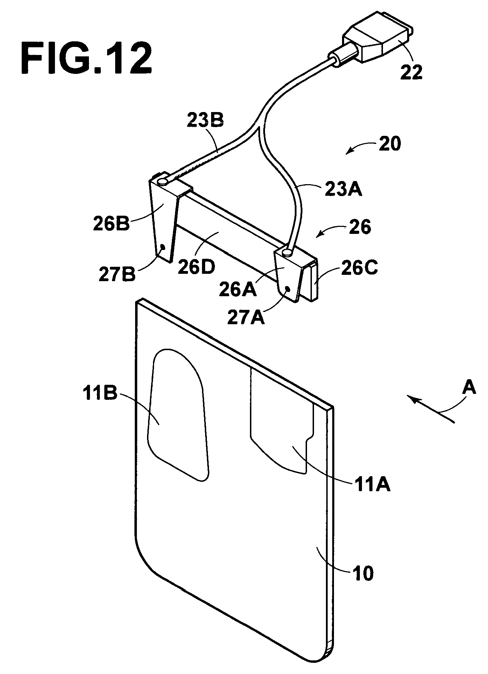

Hereinafter, a second embodiment of the auxiliary power supply of the present invention will be described. Figure 12 is an external perspective view of the auxiliary power supply according to the second embodiment of the present invention.

As shown in Figure 12, the auxiliary power supply of the second embodiment includes a coupler which is a modified coupler 20 of the first embodiment, and constituted by the connector 22 configured to be connected to the cell phone 50, wires 23A, 23B, and a battery holding section 26.

The battery holding section 26 includes metal springbacks 26A, 26B which are electrically brought into contact with electrodes 11A, 11B respectively, and a body 26C made of resin for holding the springbacks 26A, 26B. The springbacks 26A, 26B are connected to the body 26C such that the upper side of the body 26C is sandwiched by the springbacks 26A, 26B. In addition, the springbacks 26A, 26B are connected to the body 26C such that a gap is provided between each of the springbacks 26A, 26B and a side face 26D of the body 26C, which is slightly smaller than the thickness of the sheet battery 10. Further, the springbacks 26A, 26B have at their tips protruding portions 27A, 27B that protrude toward the side face 26D respectively. Each of the wires 23A, 23B of the coupler 20 is electrically connected to each of the springbacks 26A, 26B by, for example, soldering.

By inserting the sheet battery 10 between the side face 26D of the body 26C and springbacks 26A, 26B, each of the protruding portions 27A, 27B of the springbacks 26A, 26B is brought into electrical contact with each of the electrodes 11A, 11B of the sheet battery 10. Further, urging force toward the side face 26D is developed in the springbacks 26A, 26B, and the sheet battery 10 is clamped between the springbacks 26A, 26B and side face 26D by the urging force. This allows the electrical connection between the sheet battery 10 and springbacks 26A, 26B to be maintained. Thus, the power may be supplied from the sheet battery 10 to the cell phone 50 by connecting the cell phone 50 to the coupler 20.

When the coupler 20 is configured in the manner as described above, the auxiliary power supply may be reused when the sheet battery 10 is drained by simply replacing it with a new one. That is, the coupler 20 comprising the auxiliary power supply may be repeatedly used, and all that is discarded is the sheet battery 10. This makes the auxiliary power supply of the present embodiment superior in ecological viewpoint. Further, the user of the auxiliary power supply needs to purchase only the sheet battery 10, which is economical for the user.

Further, the urging force of the springbacks 26A, 26B toward the side face 26D ensures electrical connection between the sheet battery 10 and springbacks 26A, 26B even after insertion and removal of the sheet battery 10 have been repeated a number of times.

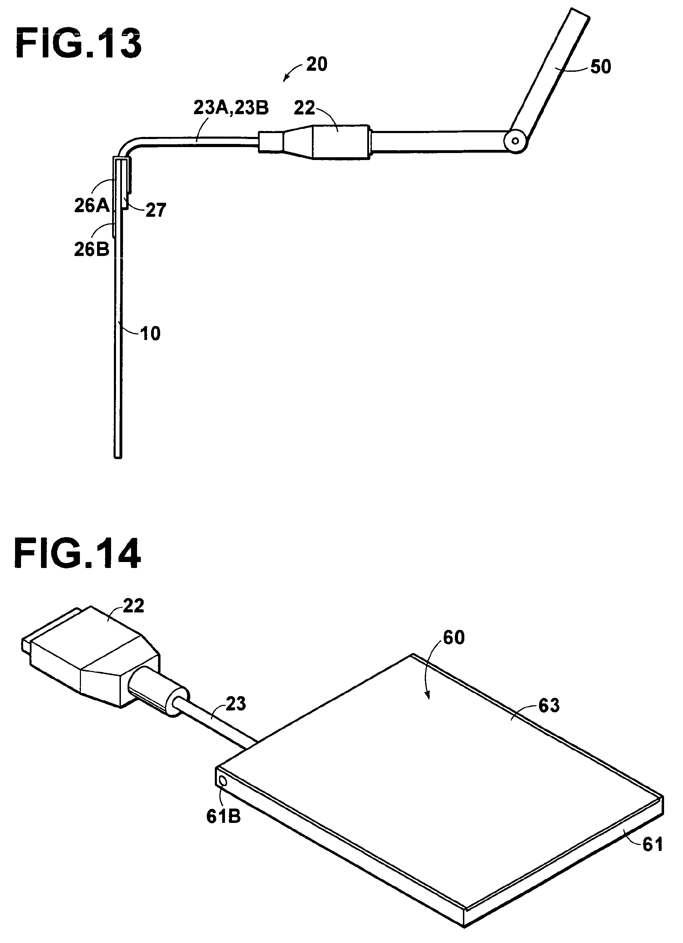

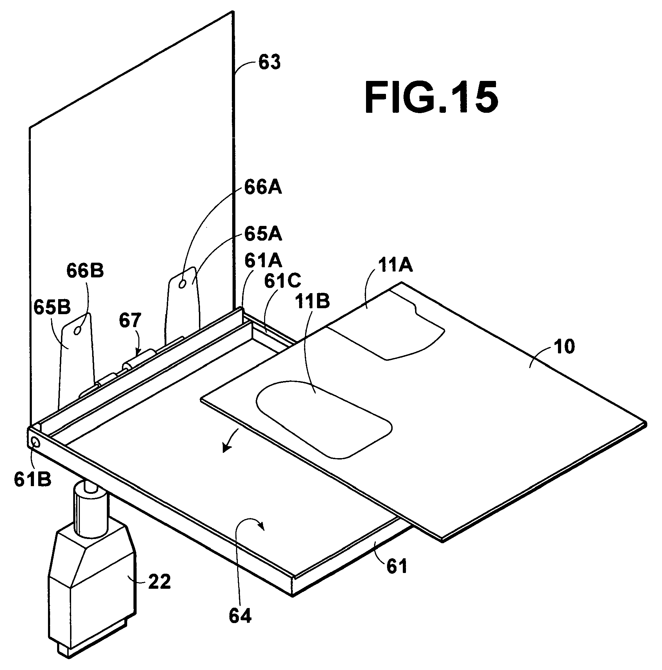

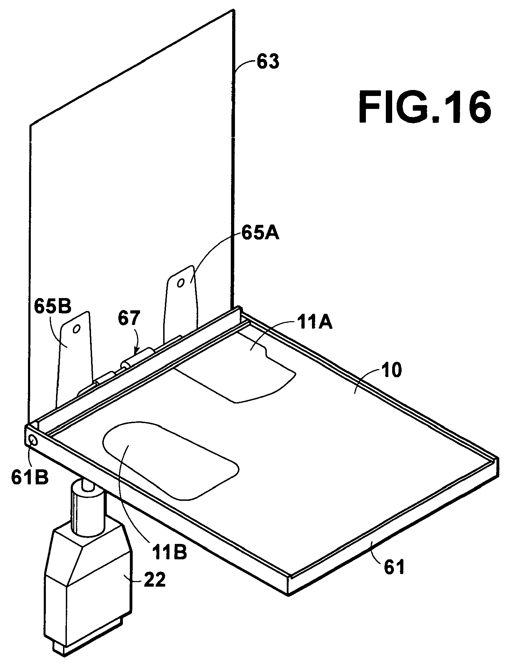

Still further, the battery holding section 26 may comprise a case 60 that accommodates the sheet battery 10. Figures 14, 15 and 16 are external perspective views of an auxiliary power supply illustrating the configuration thereof when the battery holding section 26 comprises the case 60. In the drawings, components identical to those used in the previous embodiment are given the same reference numerals, and will not be elaborated upon further here.

The case 60 includes: a case body 61 made of resin and having a hollow shape that corresponds to the shape of the sheet battery 10, and an opening 64 at the top; and a lid 63 made of resin which is turnably provided adjacent to one edge 61A of the case body 61 for opening and closing the opening 64 of the case body 61.

The case body 61 is formed such that the two edges orthogonal to the edge 61A slightly project from the edge 61A, and the lid 63 is turnably attached to the projecting portions by a shaft 61B.

The lid 63 includes metal terminals 65A, 65B attached thereon adjacent to the shaft 61B. The terminals 65A, 65B have at their tips protruding portions 66A, 66B respectively that protrude toward case body 61 when the lid 63 is closed. The wire 23 of the coupler 20 is electrically connected to the terminals 65A, 65B by, for example, soldering. The lid 63 further includes an electrical circuit 67 for controlling the current supplied from the sheet battery 10.

Undercuts 61C are formed on the inner surface of the side walls around the opening 64 of the case body 61, and the lid 63 is latched by the undercuts 61C when it is closed.

When the sheet battery 10 is mounted in the case body 61 from the opening 64 with the electrodes 11A, 11B facing up, and the lid 63 is closed, each of the protruding portions 66A, 66B of the terminals 65A, 65B is brought into electrical contact with each of the electrodes 11A, 11B of the sheet battery 10. In this state, the electrical connection between the sheet battery 10 and terminals 65A, 65B may be maintained. Thus, the power may be supplied from the sheet battery 10 to the cell phone 50 by connecting the cell phone 50 to the connector 22.

When the connecting chips are formed using the case 60 in the manner as described above, the sheet battery 10 is accommodated in the case 60 rather than being exposed, so that the auxiliary power supply becomes favorable from the viewpoint of appearance. In particular, decoration of the case 60 makes the appearance of the auxiliary power supply more favorable.

Further, the case 60 comprises the case body 61 which has the opening 64 for mounting the sheet battery 10 therein, and is formed to accommodate the sheet battery 10 mounted therein from the opening 64; and the lid 63 for opening/closing the opening 64. This allows easy replacement of the sheet battery 10 by opening/closing the lid 63.

In the second embodiment, the auxiliary power supply is described as a cell phone application. But, it is not limited to this. It may also be applied to portable devices, including flashlights, radios, portable stereos, and the like. When applied to such devices, the auxiliary power supply of the second embodiment needs to be equipped with the connector 22 which conforms to the configuration of the connecter of the device to which it is applied.

## Claims

1. An auxiliary power supply, comprising:
a sheet battery included in a film battery pack for instant camera, which is a rectangular sheet type battery having a pair of positive and negative electrodes;
connecting chips, each configured to be electrically connected to each of the electrodes of the sheet battery;
wires, each with one end connected to each of the connecting chips; and
a connector connected to the other end of each of the wires, and is configured to be connected to a cell phone that receives power from the sheet battery.

2. The auxiliary power supply according to claim 1, wherein each of the connecting chips is a conductive tape with a conductive adhesive applied on the surface which is to be connected to each of the electrodes.

3. The auxiliary power supply according to claim 1, wherein:
the connecting chips are clamping holders, each configured to be electrically connected to each of the electrodes of the sheet battery while clamping the sheet battery; and
a conductive tape with a conductive adhesive applied on both sides is applied between each of the clamp holders and each of the electrodes.

4. The auxiliary power supply according to claim 1, wherein each of the connecting chips is configured to be electrically connected to each of the electrodes of the sheet battery while detachably holding the sheet battery.

5. The auxiliary power supply according to any of claims 1 to 4, wherein a current limiting means for limiting the current that flows from the sheet battery to the cell phone is provided between one of the connecting chips and one end of the wire corresponding to the connecting chip, or between the other end of the wire and the connector.

6. The auxiliary power supply according to claim 5, wherein the current limiting means is a resistive element and/or a diode.

7. The auxiliary power supply according to claim 5, wherein the current limiting means is a resistive element having a resistance value in the range from 1Ω to 10Ω.

8. An auxiliary power supply, comprising:
a connector section configured to conform to the connector of a device to be connected thereto; and
a battery holding section electrically connected to the connector section, and is configured to be electrically connected to the electrodes of a sheet battery while detachably holding the sheet battery.

9. The auxiliary power supply according to claim 8, wherein the battery holding section comprises claming holders, each configured to be electrically connected to each of the electrodes of the sheet battery while clamping the sheet battery.

10. The auxiliary power supply according to claim 8, wherein the battery holding section further comprises a case for accommodating the sheet battery, which includes terminals therein, each configured to be electrically connected to each of the electrodes of the sheet battery.

11. The auxiliary power supply according to claim 10, wherein the case comprises:
a case body having an opening for mounting the sheet battery therein, and is formed to accommodate the sheet battery mounted therein from the opening; and
a lid for opening/closing the opening.
